# EUROPEAN PATENT SPECIFICATION

(11) **EP 3 735 348 B1**
(45) Date of publication and mention of the grant of the patent: **14.07.2021**
(21) Application number: 19701741.1
(22) Date of filing: 04.01.2019
(51) Int. Cl.: B32B 5/18, B32B 5/02, B32B 7/06, B32B 7/12, B32B 27/08, B32B 27/06, B32B 27/10, B32B 27/12, B32B 27/36, B32B 29/00, B32B 29/02

(54) **UNDERLAY MAT FOR FLOOR COVERINGS**
UNTERLAGEMATTE FÜR BODENABDECKUNGEN
TAPIS D'APPUI POUR REVÊTEMENTS DE SOL

(30) Priority: 05.01.2018 PL 42413918
(43) Date of publication of application: 11.11.2020
(73) Proprietor: Decora Spólka Akcyjna, 63-000 Sroda Wielkopolska (PL)
(72) Inventor: MALINOWSKI, Sebastian, 63-000 Sroda Wielkopolska (PL); LOWINSKI, Michal, 63-000 Sroda Wielkopolska (PL)
(74) Representative: Lisiecki, Wojciech
(86) International application number: PCT/PL2019/050001
(87) International publication number: WO 2019/135688

(56) References cited:
- DE-B3-102011 000 959
- US-A- 4 647 484
- US-A1- 2017 136 731

## Description

The present invention refers to the underlay mat for floor coverings.

The prior art discloses such underlay mats in many embodiments.

US4647484A relates to an underlay for carpets which is laid without the use of adhesive on the surface to be carpeted and at the same time is strong with elongation and dimensional stability. In particular, the underlay comprises a layer of rubber material with a layer of scrim material on top and having a layer of adhesive on top of the scrim material. On top of the layer of adhesive is a polymeric film on top of which is another layer of adhesive to which a release paper is mounted on.

DE102011000959 B3 discloses an underlay consisting of three interconnected layers including a foam layer, a flexible intermediate layer and a non-woven layer. The mineral filler obtained from sand and which is bound with plastic adhesive is provided in the flexible intermediate layer. The foam layer is made of plastic material such as polystyrene which expands at heating. The foam layer is unilaterally embossed on both sides. An additional sealing film is formed between the foam layer and intermediate layer. An independent claim is included for production method of underlay.

They are usually laid on such a substrate as concrete floor or screed before laying the floor covering, e.g. in the form of wooden or plastic floor panels (e.g. laminate) .

By using such mats, it is possible to obtain, in particular, e.g. the levelling of possible substrate irregularities, reduction in sound above the floor cover in the room where the floor is installed and reduction in audible sounds in rooms below the one where the floor is installed.

The characteristic of commonly known underlay mats is that in order to ensure soundproofing, the mats are provided with a layer of less or more elastic, resilient material such as cork or plastics (most frequently foamed), for instance, polyolefins (PO), polyethylene (PE), polyurethane (PU), polystyrene (PS), ethylene vinyl acetate (EVA) etc.

Underlay mats may be used, e.g. as a loosely laid function layer of floor, i.e. without being fixed to the substrate or floor covering. In many cases, it is more preferable to use an underlay mat with gluing between the surface layer of the underlay mat and the bottom layer of the floor covering, which usually translates into an increase in the comfort of walking on the floor. This kind of gluing, however, constitutes a certain cost in the floor production.

Irrespective of the type of the used adhesive, the problem of damaging the flexible, resilient layer by substances evaporating from the adhesive may occur and may have a negative effect on the desirable properties of the mat over time. This type of a negative effect may also be caused by substances evaporating from the floor covering regardless of its material. Another risk for the durability of the floor may be a liquid spilled on the floor, which may, for instance, reach inside the underlay mat.

In order to reduce the problems described above, the prior art proposes underlay mats with a multi-layer design, which is often connected with high material and production costs, non-optimal utility properties and/or use of non-ecological materials.

The aim of this invention is to manufacture an underlay mat enabling the easy installation, which meets high requirements regarding utility properties and durability despite low costs of materials and production, as well as good tolerance by the natural environment.

According to the invention, this task is fulfilled by the underlay mat for floor coverings, which contains:
- the foamed polystyrene layer,
- the PET (polyethylene terephthalate) film on the top side of the polystyrene layer,
- the layer of adhesive applied on the PET film and
- the removable protective layer applied on the layer of adhesive.

The underlay mat, which is the subject of the invention, is not expensive in production, and despite this, it guarantees good utility properties at simultaneous good tolerance by the natural environment, in particular, in view of the fact that polystyrene is well suited for recycling.

The mechanical properties of the underlay mat such as drum sound, impact sound, etc. and its thermal properties (e.g. thermal insulation and thermal capacity) are co-determined by the properties of the used foamed polystyrene layer. These properties can be, to a large extent adjusted in a very positive way, e.g. through a selection of process parameters during the production of the polystyrene layer.

In one of the embodiments, the polystyrene layer consists of extruded polystyrene. At the same time, it is preferred to use the closed-cell foam, in particular, the one which is relatively hard and which demonstrates high mechanical load capacity and high resistance to moisture. The high mechanical load capacity translates into the protection of the floor covering against damage resulting from the use of the floor.

In one of the embodiments, the specific weight of the polystyrene layer ranges between 30 and 200 kg/m³, in particular between 100 and 200 kg/m³.

The relatively high density of the polystyrene layer, for instance, higher than 50 kg/m³, and in particular, higher than 80 kg/m³ is the preferred embodiment in view of the mechanical load capacity and an increase in the walking comfort related thereto.

The most preferable thickness of the polystyrene layer is the thickness of at least 1.0 mm, in particular, at least 1.1 mm. In reference to the most frequent examples of application of the mat, the maximum thickness of around 2.0 mm, in particular, maximum 1.8 mm has been determined as the preferred thickness.

In one of the preferred embodiments, the thickness of the polystyrene layer ranges between 1.1 and 1.8 mm.

In one of the embodiments, the thickness of the polystyrene layer constitutes no less than 80%, in particular at least 90% of the total thickness of the underlay mat. On the other hand, it is most frequently preferred that the thickness of the polystyrene layer covers maximum 99% of the total thickness.

It is ideal, if the PET film is provided with the liquid or gas blocking function, so that the polystyrene layer is well protected, e.g. against penetration of harmful substances from the top. Furthermore, the PET film translates into better thermal insulation of the underlay mat, and functions successfully as the load-bearing layer for the applied layer of adhesive.

In one of the embodiments, the PET film was laminated directly from the top side of the polystyrene layer, in another one, it was applied by means of the heat-sealing process, and still in another one, the PET film was glued to the polystyrene layer.

In view of this type of a joint between the PET film and polystyrene, i.e. without further function layers between PET and polystyrene, it turned out to be particularly preferable in the production of a cheap and reliable joint.

In particular, it is possible to apply inexpensive adhesives here, which do not lead to the damage of the PET film or polystyrene layer, i.e. they do not affect the reduction in the durability of the underlay mat.

In the particularly preferred embodiment, the PET film was glued directly on the top side of the polystyrene layer, using the adhesive which was also used to manufacture the layer of adhesive applied onto the PET film.

There is a whole range of adhesives available, which are perfectly fit for gluing both the PET film and polystyrene as well as PET film and other popular materials from which floor coverings are produced.

In the case of the underlay mat, which is the subject of the invention, the layer of adhesive applied onto the PET film, in combination with the removable protective layer applied on the layer of adhesive, translates into an easy installation of the underlay mat. After laying the floor mat and removing the protective layer, the user can easily glue the floor covering (e.g. floor panels) through its application to the mat. Therefore, it is not necessary to use additional adhesive that is suitable for fixing the floor covering.

In the preferred embodiment, owing to the appropriate selection of the adhesive, the layer of the adhesive demonstrates low initial adhesion in relation to popular plastics from which floor coverings such as e.g. PVC (polyvinyl chloride) are manufactured. This allows the correction of the position of an element of the floor covering (e.g. a plastic floor panel) on the underlay mat by the user, after its first application. The performance of such adhesive, which initially holds rather weakly, is strengthened after some time, which ensures good adhesion of the finished floor covering to the underlay mat.

The underlay mat, which is the subject of the invention, is thus particularly well fit for application together with floor coverings, or elements of the covering made of plastics such PVC.

In one of the embodiments, the layer of adhesive is characterised by a mesh immersed in it, which is made from fibres. The mesh can, for instance, be a square mesh. Fibres may contain, in particular, fibres in the form of threads. The fibres may be natural and/or synthetic fibres.

In one of the embodiments, the removable protective layer includes the plastic film and/or layer of paper, e.g. a laminate made from these materials.

In one of the embodiments, the underlay mat has the surface specific weight ranging between 0.25 and 0.5 kg/m².

The most preferable thickness of the underlay mat is the thickness of at least 1.0 mm, in particular, at least 1.1 mm. In reference to the most frequent examples of application of the mat, the maximum thickness of around 2.2 mm, in particular, maximum 2.0 mm has been determined as the preferred thickness.

In one of the preferred embodiments, the thickness of the underlay mat ranges between 0.8 and 3.0 mm.

Other advantages of the underlay mat, in many cases of applications, include the possibility of laying the polystyrene layer directly on the substrate (e.g. concrete, screed, etc.), even if such substrate demonstrates certain local or isolated irregularities. The multi-layer underlay mats disclosed by the prior art in the form of the layer located at the very bottom often have a special function layer to compensate for any unevenness, e.g. a non-woven layer or a similar one. The application of such layers located at the bottom of the underlay mat involves additional costs. In the case of the underlay mat, which is the subject of the invention, it turned out that the function of levelling out of any insignificant or isolated unevenness, in particular, is perfectly fulfilled by the polystyrene layer. Thus, the application of the special finishing layer from the underside of the underlay mat, e.g. the non-woven layer or similar one, is not necessary in the case of this invention.

In connection with the foregoing, in one of the specific embodiments, the polystyrene layer forms the lowest layer of the underlay mat.

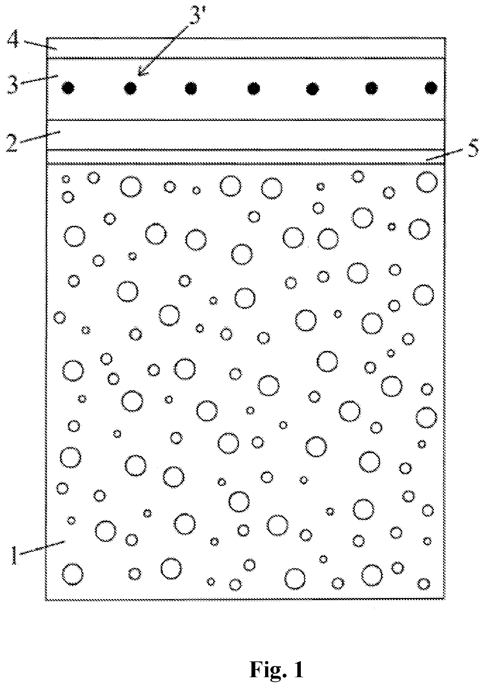

The invention has been described below based on one embodiment in reference to the attached figure. The cross-section of the underlay mat has been presented in Fig. 1 in accordance with the given embodiment.

Fig. 1 presents, without being true to scale, the cross-section of the underlay mat for floor coverings, which occurs in the presented example in the form of a rolled material with a length of many metres (e.g. 8.50 m) and width of more or less one metre (e.g. 1.20 m).

The underlay mat presented in figure 1 consists of:
- the foamed polystyrene layer (1),
- the PET film (2) on the top side of the polystyrene layer (1),
- the layer of adhesive (3) applied on the PET film (2) and
- - the removable protective layer (4) applied on the layer of adhesive (3).

In the presented example, the polystyrene layer (1) consists of extruded polystyrene, often referred to as "XPS", with a specific weight of around 100 kg/m3 and thickness of around 1.4 mm.

The PET film (2) was laminated directly on the top side of the polystyrene layer by means of a relatively thin layer of adhesive (5) (e.g. acrylic adhesive) 1.

The layer of adhesive (3) applied on the PET film (2) is formed by the same adhesive which was used to generate the layer of adhesive (5).

In order to improve the mechanical load capacity of gluing (not presented in the figure) of the floor veneer by means of the layer of adhesive (3), the layer is characterised by the square fibre mesh immersed in it (3').

After laying the underlay mat on the substrate, the user can successively remove the protective layer of paper/plastic material (4) from the top side of the underlay mat, lay the elements of the floor covering on it (such as e.g. PVC panels) and glue them at the same time. The top layer of the underlay mat is made from paper, thus it can bear any print without any problem.

## Claims

1. Underlay mat for floor coverings which contains:
- the foamed polystyrene layer (1),
- the PET film (2) on the top side of the polystyrene layer (1),
- the layer of adhesive (3) applied onto the PET film (2) and
- the removable protective layer (4) applied on the layer of adhesive (3).

2. The underlay mat according to claim 1 **characterised in that** the polystyrene layer (1) consists of extruded polystyrene.

3. The underlay mat according to claim 1 or 2 **characterised in that** the polystyrene layer (1) has the specific weight ranging between 30 and 200 kg/m³, in particular between 100 and 200 kg/m³.

4. The underlay mat according to one of the aforementioned claims **characterised in that** the polystyrene layer (1) has the thickness ranging between 1.1 and 1.8 mm.

5. The underlay mat according to one of the aforementioned claims **characterised in that** the PET film (2) is laminated directly on the top side of the polystyrene layer (1).

6. The underlay mat according to one of the aforementioned claims **characterised in that** the PET film (2) was glued directly on the top side of the polystyrene layer (1) by means of an adhesive which was also used to generate the layer of adhesive (3).

7. The underlay mat according to one of the aforementioned claims **characterised in that** the layer of adhesive (3) includes the fibre mesh (3') which is immersed in it.

8. The underlay mat according to one of the aforementioned claims **characterised in that** the removable protective layer (4) contains plastic foil and/or the layer of paper.

9. The underlay mat according to one of the aforementioned claims **characterised in that** the underlay mat has the surface specific weight ranging between 0.25 and 0.5 kg/m².

10. The underlay mat according to one of the aforementioned claims **characterised in that** the thickness of the underlay mat ranges between 0,8 and 3.0 mm, in particular, between 1.3 and 1.9 mm.

11. The underlay mat according to one of the aforementioned claims **characterised in that** the polystyrene layer (1) is the lowest layer of the underlay mat.

## Patentansprüche

1. Unterlegmatte für Fußbodenbeläge bestehend aus:
- einer Schicht expandierten Polystyrols (1),
- PET-Film (2) auf der Oberseite der Polystyrolschicht (1),
- einer Klebstoffschicht (3), die auf den PET-Film (2) aufgetragen wird und
- einer abziehbare Schutzschicht (4), die auf die Klebstoffschicht (3) aufgetragen wird.

2. Unterlegmatte nach Anspruch Nr. 1 **dadurch gekennzeichnet, dass** die Polystyrolschicht (1) aus extrudiertem Polystyrol besteht.

3. Unterlegmatte nach Anspruch Nr. 1 oder 2 **dadurch gekennzeichnet, dass** die Polystyrolschicht (1) spezifisches Gewicht zwischen 30 und 200 kg / m³, insbesondere zwischen 100 und 200 kg / m³ aufweist.

4. Unterlegmatte nach einem der oben genannten Ansprüche **dadurch gekennzeichnet, dass** die Polystyrolschicht (1) zwischen 1,1 und 1,8 mm dick ist.

5. Unterlegmatte nach einem der oben genannten Ansprüche **dadurch gekennzeichnet, dass** der PET-Film (2) direkt auf die Oberseite der Polystyrolschicht (1) laminiert wird.

6. Unterlegmatte nach einem der oben genannten Ansprüche **dadurch gekennzeichnet, dass** der PET-Film (2) mittels eines Klebstoffs, der auch zur Bildung der Klebstoffschicht (3) verwendet wurde, direkt auf die Oberseite der Polystyrolschicht (1) geklebt wird.

7. Unterlegmatte nach einem der oben genannten Ansprüche **dadurch gekennzeichnet, dass** die Klebstoffschicht (3) das darin eingetauchte Fasernetz (3') enthält.

8. Unterlegmatte nach einem der oben genannten Ansprüche **dadurch gekennzeichnet, dass** die entfernbare Schutzschicht (4) Kunststofffolie und / oder Papierschicht enthält.

9. Unterlegmatte nach einem der oben genannten Ansprüche **dadurch gekennzeichnet, dass** die Unterlegmatte ein Flächengewicht zwischen 0,25 und 0,5 kg/m² aufweist.

10. Unterlegmatte nach einem der oben genannten Ansprüche **dadurch gekennzeichnet, dass** die Dicke der Unterlegmatte zwischen 0,8 und 3,0 mm, insbesondere zwischen 1,3 und 1,9 mm beträgt.

11. Unterlegmatte nach einem der oben genannten Ansprüche **dadurch gekennzeichnet, dass** die Polystyrolschicht (1) die unterste Schicht der Unterlegmatte ist.

## Revendications

1. Un tapis de sous-couche pour revêtements de sol qui contient :
- la couche de polystyrène expansé (1),
- le film PET (2) sur la face supérieure de la couche de polystyrène (1),
- la couche d'adhésif (3) appliquée sur le film PET (2), et
- la couche de protection amovible (4) appliquée sur la couche d'adhésif (3).

2. Le tapis de sous-couche selon la revendication 1, **caractérisé en ce que** la couche de polystyrène (1) est constituée de polystyrène extrudé.

3. Le tapis de sous-couche selon la revendication 1 ou 2, **caractérisé en ce que** la couche de polystyrène (1) a un poids spécifique compris entre 30 et 200 kg/m3, en particulier entre 100 et 200 kg/m³.

4. Le tapis de sous-couche selon l'une des revendications précédentes **caractérisé en ce que** la couche de polystyrène (1) a une épaisseur comprise entre 1,1 et 1,8 mm.

5. Le tapis de sous-couche selon l'une des revendications précédentes, **caractérisé en ce que** le film PET (2) est laminé directement sur la face supérieure de la couche de polystyrène (1).

6. Le tapis de sous-couche selon l'une des revendications précédentes, **caractérisé en ce que** le film PET (2) a été collé directement sur la face supérieure de la couche de polystyrène (1) au moyen d'un adhésif qui a également été utilisé pour générer la couche d'adhésif (3).

7. Le tapis de sous-couche selon l'une des revendications précédentes, **caractérisé en ce que** la couche d'adhésif (3) comprend le tissu de fibres (3') qui y est immergé.

8. Le tapis de sous-couche selon l'une des revendications précédentes, **caractérisé en ce que** la couche de protection amovible (4) contient du film plastique et/ou la couche de papier.

9. Le tapis de sous-couche selon l'une des revendications précédentes, **caractérisé en ce que** le tapis de sous-couche présente un poids spécifique de surface compris entre 0,25 et 0,5 kg/m².

10. Le tapis de sous-couche selon l'une des revendications précédentes **caractérisé en ce que** l'épaisseur du tapis de sous-couche est comprise entre 0,8 et 3,0 mm, notamment entre 1,3 et 1,9 mm.

11. Le tapis de sous-couche selon l'une des revendications précédentes, **caractérisé en ce que** la couche de polystyrène (1) est la couche la plus basse du tapis de sous-couche.
